(19) Europäisches Patentamt
European Patent Office
Office européen des brevets

(11) Numéro de publication : **0 167 452**
**B1**

(12) # FASCICULE DE BREVET EUROPÉEN

(45) Date de publication du fascicule du brevet : **30.09.87**

(51) Int. Cl.[4] : **C 09 K 5/04**

(21) Numéro de dépôt : **85401308.3**

(22) Date de dépôt : **27.06.85**

(54) **Mélanges stables de N-méthyl-pyrrolidone et d'hydrocarbures chlorofluores.**

(30) Priorité : **06.07.84 FR 8410755**

(43) Date de publication de la demande :
**08.01.86 Bulletin 86/02**

(45) Mention de la délivrance du brevet :
**30.09.87 Bulletin 87/40**

(84) Etats contractants désignés :
**AT BE CH DE FR GB IT LI LU NL SE**

(56) Documents cités :
**EP-A- 0 062 516**
**GB-A- 709 587**
**US-A- 2 943 052**
**US-A- 3 920 572**

(73) Titulaire : **ATOCHEM**
**4 & 8, Cours Michelet La Défense 10**
**F-92800 Puteaux (FR)**

(72) Inventeur : **Bertocchio, René**
**31, rue des Vallières**
**F-69390 Vourles-par-Vernaison (FR)**
Inventeur : **Mathais, Henri Hameau de Saint-Didier**
**Villa no. 2 Chemin de l'Indiennerie, 87**
**F-69370 Saint-Didier-au-Mont-d'or (FR)**

(74) Mandataire : **Leboulenger, Jean et al**
**ATOCHEM Département Propriété Industrielle**
**F-92091 Paris la Défense 10 Cédex 42 (FR)**

EP 0 167 452 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne la stabilisation de mélanges de fluides calogènes chlorofluorés et de solvants.

De tels mélanges sont utilisés dans les pompes à chaleur à absorption où ils sont exposés en permanence à des températures de l'ordre de 120 à 180 °C au contact du métal constituant les parois du bouilleur. Pour cette application, les solvants les plus intéressants sont ceux qui présentent le plus grand écart de point d'ébullition par rapport au fluide calogène et également le plus grand pouvoir de solubilisation ; ces deux propriétés premettent en effet de réduire les pressions de service et les dimensions de l'appareil et de conduire ainsi à des coûts de fabrication plus avantageux. Les solvants les plus utilisés appartiennent à la classe des éthers de glycols ou à celle des amides ; parmi ces derniers, la N-méthylpyrrolidone se distingue particulièrement par son pouvoir solvant élevé pour les hydrocarbures chlorofluorés du type $C_nH_{(2n+2-x-y)}F_xCl_y$ et plus spécialement pour ceux possédant un ou plusieurs atomes d'hydrogène dans leur molécule tels que, par exemple, $CF_3$—CFClH, $CF_2Cl$—$CF_2H$, $CF_3$—$CH_2Cl$ et $CF_2Cl$—$CH_3$. Cette solubilité élevée s'explique par la formation de liaisons intermoléculaires du type liaison hydrogène entre la N-méthylpyrrolidone et le calogène chlorofluoré.

Cependant, ces mélanges ne sont pas stables lorsqu'ils sont chauffés en présence de métaux, notamment de fer, comme cela se passe dans le bouilleur d'une pompe à chaleur par absorption. Il est connu que les hydrocarbures chlorofluorés, chauffés en présence de fer, d'aluminium ou de cuivre et d'un composé donneur d'hydrogène subissent une transformation quantitative avec substitution progressive de tous les atomes de chlore par des atomes d'hydrogène ; selon la réactivité du donneur (R—H), il se forme également une proportion plus ou moins importante de dérivé éthylénique. Ainsi par exemple, le chloro-1 trifluoro-2,2,2 éthane conduit simultanément au trifluoro-1,1,1 éthane et au fluorure de vinylidène par les réactions suivantes :

$$CF_3\text{-}CH_2Cl \quad + \quad Fe \longrightarrow CF_3\text{-}CH_2\bullet \quad + \quad FeCl^\bullet$$

$$CF_3\text{-}CH_2\bullet \quad + \quad R\text{-}H \longrightarrow CF_3\text{-}CH_3 \quad + \quad R^\bullet$$

$$CF_3\text{-}CH_2^\bullet \quad + \quad FeCl^\bullet \longrightarrow CF_2{=}CH_2 \quad + \quad FeFCl$$

Ces réactions conduisent à une modification totale des caractéristiques physico-chimiques du mélange calogène/solvant et à la formation de goudrons avec libération d'acide chlorhydrique. L'attaque des parois métalliques de la machine et notamment des parois du bouilleur, point le plus chaud de l'ensemble, conduit à la formation d'hydrogène, particulièrement gênant pour le bon fonctionnement du cycle thermodynamique, et de sels métalliques dont l'action corrosive est bien connue. La modification de la nature du couple calogène/solvant, les effets de la corrosion et notamment la formation de gaz incondensables provoquent la détérioration des conditions de fonctionnement de la pompe à chaleur et peuvent entraîner très rapidement sa mise hors d'usage.

Les mélanges de N-méthylpyrrolidone et d'hydrocarbures chlorofluorés sont très difficiles à stabiliser et, comme montré plus loin, de nombreuses classes de stabilisants se révèlent totalement ou partiellement inefficaces dans le cas particulier de la N-méthylpyrrolidone.

Il a maintenant été trouvé que certains sels métalliques des acides alkylarylsulfoniques ne présentent pas cet inconvénient et permettent de stabiliser efficacement des mélanges de N-méthylpyrrolidone et d'hydrocarbures chlorofluorés, de sorte que ces mélanges peuvent être portés sans risque à des températures nettement supérieures à la température normale au contact de métaux tels que le fer, l'aluminium ou le cuivre.

L'invention a donc pour objet des mélanges stables de N-méthylpyrrolidone et d'hydrocarbures chlorofluorés, caractérisés en ce qu'ils contiennent un composé de formule générale :

$$(R_m\text{—}Ar\text{—}SO_3)_2M$$

dans laquelle R représente un radical alkyle à chaîne linéaire ou ramifiée renfermant de 1 à 15 atomes de carbone, Ar est un reste aromatique à un ou plusieurs noyaux aromatiques condensés, M est un atome de zinc ou d'un métal alcalino-terreux, et m est un nombre entier allant de 1 à 3.

Dans les mélanges selon l'invention, la proportion d'hydrocarbures chlorofluoré peut varier en général entre 10 et 60 % par rapport au poids total du mélange.

La quantité d'alkylarylsulfonate à utiliser peut varier de 0,05 à 2,5 % par rapport au poids de N-méthylpyrrolidone. Elle est de préférence comprise entre 0,5 et 2 %.

Les essais suivants A et B ont été réalisés sans stabilisant, à titre de témoins. Les essais C et D, réalisés avec des stabilisants connus, sont à comparer aux exemples 1 à 4 qui illustrent l'invention sans la

limiter. Les abréviations employées ont la signification suivante :

R124 = chloro-1 tétrafluoro-1,2,2,2 éthane $CF_3-CFClH$

R133 a = chloro-1 trifluoro-2,2,2 éthane $CF_3-CH_2Cl$

NMP = N-méthyl-pyrrolidone

Essais A

5 mmoles de R124 sont introduites dans un tube pyrex à paroi épaisse renfermant 3 g de NMP et une éprouvette métallique de 250 mg d'acier inoxydable convenablement nettoyé. Le tube est refroidi à la température de l'azote liquide, scellé sous vide et porté à une température de 180 °C durant 100 heures. Il est ensuite à nouveau replongé dans l'azote liquide, relié à une rampe à vide et ouvert à l'aide d'un dispositif approprié. Le contenu est récupéré sous forme liquide et gazeuse et analysé par chromatographie en phase gazeuse.

L'analyse montre que 71 % du R124 initial ont été transformés dont 61,7 % en $CF_3CFH_2$ et 7,8 % en $CF_2 = CFH$.

Si on répète l'essai précédent en remplaçant l'éprouvette d'acier inoxydable par un morceau d'acier ordinaire, le taux de transformation du R124 atteint dans ce cas 55,4 %.

Essais B

5 mmoles de R133a, 3 g de NMP et une éprouvette d'acier inoxydable de 250 mg sont placés dans un tube pyrex et le mélange est maintenu à 180 °C durant 100 heures. Après ouverture du tube, on constate que 93,4 % du R133a initial ont été transformés dont 62,5 % en $CF_3CH_3$ et 24,5 % en $CF_2 = CH_2$.

Si, dans le test précédent, l'acier inoxydable est remplacé par de l'acier ordinaire, le taux de décomposition atteint 76,1 % dont 60,4 % en $CF_3CH_3$ et 10 % en $CF_2 = CH_2$.

Essais C

Le même mélange R133a/NMP qu'aux essais B est soumis au même test en présence d'éprouvettes métalliques en acier inoxydable et de trois stabilisants connus pour leur activité antioxydante. Ces produits utilisés à la concentration de 1,5 % en poids par rapport au poids de NMP ne présentent aucune efficacité.

| Stabilisant | Taux de décomposition du $CF_3CH_2Cl$ |
|---|---|
| β-naphtol | 93,8 % |
| pentadiène-1,3 | 95,2 % |
| allyl méthyléther | 89,2 % |

Essais D

On opère comme dans les essais précédents avec les couples R133a/NMP ou R124/NMP en ajoutant, à raison de 1,5 % par rapport au poids de NMP, un composé choisi parmi les agents complexants du fer.

A l'issue du test de 100 heures à 180 °C, les taux de décomposition sont tels qu'indiqués dans le tableau de la page 6.

Exemple 1

Dans un tube pyrex à paroi épaisse on chauffe à 180 °C durant 100 heures un mélange de 5 mmoles de R124 et de 3 g de NMP en présence d'une éprouvette de 250 mg d'acier ordinaire et de 45 mg de

dodécylbenzène sulfonate de calcium (Ninate 401 de la Société STEPAN EUROPE).

A l'issue du test, le taux de décomposition du R124 n'est que de 0,7 % ($CF_3CFH_2$) et le mélange ne présente qu'une légère coloration.

Exemple 2

On opère comme à l'exemple 1, sauf qu'on remplace le dodécylbenzènesulfonate de calcium par la même quantité (45 mg) de dinonylnaphtalènesulfonate de baryum (NASUL BSN de la Société ANSUL).

Après 100 heures de chauffage à 180 °C, on n'observe qu'une faible coloration du solvant et l'analyse chromatographique du mélange gazeux montre qu'il ne s'est produit qu'une transformation très limitée du R124 en $CF_3CFH_2$ (1,9 %).

(Voir Tableau page 5)

| Couple | Métal | Stabilisant | Taux de décomposition de l'hydrocarbure chlorofluoré |
|---|---|---|---|
| R 133a/NMP | Acier inoxydable | Acide sulfosalicylique | 85,4 % |
| " | " " | Phénanthroline-1,10 | 97,0 % |
| " | " " | Sel disodique de l'acide éthylène diaminotétracétique | 89,8 % |
| R 133a/NMP | Acier ordinaire | Acide éthylène diaminotétra (méthylène-phosphonique) | 65,8 % |
| " | " " | Acide hydroxy-1 éthane diphosphonique-1,1 | 57,2 % |
| " | " " | Phénanthroline-1,10 | 57,8 % |
| " | " " | Bipyridyle | 70,7 % |
| " | " " | Acide sulfosalicylique | 51,9 % |
| R 124/NMP | Acier ordinaire | Phénanthroline 1-10 | 38,6 % |
| " | " " | Bipyridyle | 54,9 % |
| " | " " | Acide sulfosalicylique | 28,9 % |

Exemple 3

On opère comme à l'exemple 1, sauf qu'on remplace, d'une part, le R124 par 5 mmole de R133a et, d'autre part, le dodécylbenzènesulfonate de calcium par la même quantité de dinonylnaphtalènesulfonate de zinc (NASUL ZS de la Société ANSUL).

Au terme du test de 100 heures à 180 °C, le taux de décomposition du R133a ne dépasse pas 0,9 %.

Exemple 4

On opère comme à l'exemple 1, sauf qu'on remplace le dodécylbenzènesulfonate par la même quantité de dinonylnaphtalènesulfonate de zinc.

Le taux de décomposition du R124 n'est que de 3,4 %.

**Revendications**

1. Mélanges stables de N-méthylpyrrolidone et d'hydrocarbures chlorofluorés, caractérisés en ce qu'ils contiennent un sel métallique d'acide alkylarylsulfonique en une proportion de 0,05 à 2,5 % en poids par rapport à la N-méthylpyrrolidone, ledit sel métallique répondant à la formule :

$$(R_m\text{—}Ar\text{—}SO_3)_2M$$

dans laquelle R représente un radical alkyle à chaîne linéaire ou ramifiée renfermant de 1 à 15 atomes de carbone, m est un nombre entier allant de 1 à 3, Ar est un reste aromatique à un ou plusieurs noyaux aromatiques condensés, et M est un atome de zinc ou d'un métal alcalino-terreux.

2. Mélanges selon la revendication 1, dans lesquels le sel métallique est le dodécylbenzènesulfonate de calcium.

3. Mélanges selon la revendication 1, dans lesquels le sel métallique est le dinonylnaphtalènesulfonate de baryum ou de zinc.

4. Mélanges selon l'une des revendications 1 à 3, dans lesquels l'hydrocarbure chlorofluoré est le chloro-1 trifluoro-2,2,2 éthane ou le chloro-1 tétrafluoro-1,2,2,2 éthane.

5. Mélanges selon l'une des revendications 1 à 4, dans lesquels la proportion d'hydrocarbure chlorofluoré est de 10 à 60 % par rapport au poids total du mélange.

6. Mélanges selon l'une des revendications 1 à 5, dans lesquels la proportion de sel métallique est de 0,5 à 2 % par rapport au poids de N-méthylpyrrolidone.

**Claims**

1. Stable mixtures of N-methylpyrrolidone and chlorofluorinated hydrocarbons, characterised in that they contain a metal salt of an alkylarylsulphonic acid in a proportion of 0.05 to 2.5 % by weight relative to N-methylpyrrolidine, said metal salt corresponding to the formula :

$$(R_m\text{—}Ar\text{—}SO_3)_2M$$

in which R denotes a straight- or branched chain alkyl radical containing from 1 to 15 carbon atoms, m is an integer ranging from 1 to 3, Ar is an aromatic residue with one or more condensed aromatic nuclei, and M is an atom of zinc or of an alkaline-earth metal.

2. Mixtures according to Claim 1, in which the metal salt is calcium dodecylbenzenesulphonate.

3. Mixtures according to Claim 1, in which the metal salt is barium or zinc dinonylnaphtalenesulphonate.

4. Mixtures according to one of Claims 1 to 3, in which the chlorofluorinated hydrocarbon is 1-chloro-2,2,2-trifluoroethane or 1-chloro-1,2,2,2-tetrafluoroethane.

5. Mixtures according to one of Claims 1 to 4, in which the proportion of chlorofluorinated hydrocarbon is from 10 to 60 % relative to the total weight of the mixture.

6. Mixtures according to one of Claims 1 to 5, in which the proportion of metal salt is from 0,5 to 2 % relative to the weight of N-methylpyrrolidone.

**Patentansprüche**

1. Stabile Mischungen von N-Methylpyrrolidon mit chlorfluorierten Kohlenwasserstoffen, dadurch gekennzeichnet, daß diese ein Metallsalz einer Alkylarylsulfonsäure in einem Verhältnis von 0,05 bis 2,5 Gew.%, bezogen auf das N-Methylpyrrolidon, enthalten, wobei dieses Metallsalz der folgenden Formel entspricht :

$$(R_m—Ar—SO_3)_2M$$

in der R einen Alkylrest mit linearer oder verzweigter Kette darstellt, der 1 bis 15 Kohlenstoffatome aufweist, m eine ganze Zahl zwischen 1 und 3 ist, Ar ein aromatischer Rest mit einem oder mehreren kondensierten aromatischen Kernen ist und M ein Zinkatom oder ein Erdalkalimetallatom ist.

2. Mischungen nach Anspruch 1, in denen das Metallsalz das Calciumdodecylbenzolsulfonat ist.

3. Mischungen nach Anspruch 1, in denen das Metallsalz das Dinonylnaphthalinsulfonat des Bariums oder des Zinks ist.

4. Mischungen nach einem der Ansprüche 1 bis 3, in denen der chlorfluorierte Kohlenwasserstoff 1, -Chlor-2,2,2-trifluorethan oder 1-Chlor-1,2,2,2-tetrafluorethan ist.

5. Mischungen nach einem der Ansprüche 1 bis 4, in denen der Anteil des chlorfluorierten Kohlenwasserstoffs zwischen 10 und 60 % bezogen auf das Gesamtgewicht der Mischung beträgt.

6. Mischungen nach einem der Ansprüche 1 bis 5, in denen der Anteil des Metallsalzes 0,5 bis 2 %, bezogen auf das Gewicht des N-Methylpyrrolidons, beträgt.